# EUROPÄISCHE PATENTSCHRIFT

(11) **EP 4 091 872 B1**
(45) Veröffentlichungstag und Bekanntmachung des Hinweises auf die Patenterteilung: **16.04.2025**
(21) Anmeldenummer: 22174227.3
(22) Anmeldetag: 19.05.2022
(51) Int. Cl.: B60M 1/26

(54) **ABSPANNEINRICHTUNG**
TENSIONING DEVICE
DISPOSITIF TENDEUR

(30) Priorität: 21.05.2021 EP 21175181
(43) Veröffentlichungstag der Anmeldung: 23.11.2022
(73) Patentinhaber: European Trans Energy GmbH, 1100 Wien (AT)
(72) Erfinder: Winter, Hubert, 8811 Scheifling (AT)
(74) Vertreter: Puchberger & Partner Patentanwälte

(56) Entgegenhaltungen:
- EP-A1- 0 695 666
- EP-A1- 1 281 563
- CN-U- 203 528 324
- GB-A- 2 207 403

## Beschreibung

Abspanneinrichtungen werden im Stand der Technik eingesetzt, um Fahrdrähten und/oder Tragseilen von Fahrdrähten die nötige Spannung zu verleihen. Derartige Einrichtungen finden beispielsweise im Bereich des schienengebundenen Verkehrs, insbesondere bei Eisenbahnen, Verwendung.

Bekannte Abspanneinrichtungen umfassen ein Abspanngewicht, das an Führungsstangen beweglich geführt ist. Für die Montage der Abspanneinrichtungen werden die Elemente der Konstruktion getrennt bereitgestellt und am Ort der bestimmungsgemäßen Verwendung zu einer Abspanneinrichtung zusammengesetzt. Die Führungsstangen werden beispielsweise an einer Tunnelwand befestigt und das Abspanngewicht wird danach an den Führungsstangen angeordnet. Abschließend wird die Verbindung mit dem Tragseil oder dem Fahrdraht hergestellt.

Diese Vorgehensweise ist erforderlich, da eine derartige Anordnung ohne weitere Befestigung nicht ausreichend stabil ist. Daher kann eine Abspannvorrichtung üblicherweise nicht in zusammengesetztem Zustand an ihren Bestimmungsort transportiert werden. Somit ist vor Ort eine längere Montagedauer erforderlich, da neben der Befestigung der Komponenten auch der Zusammenbau der eigentlichen Abspanneinrichtung erst unmittelbar am Bestimmungsort möglich ist. Dies ist jedoch aus mehreren Gründen nachteilig. Insbesondere stehen auf Baustellen für Einrichtungen des schienengebundenen Verkehrs für bestimmte Arbeitsschritte meist nur genau definierte Zeitintervalle zur Verfügung. Ähnliches gilt bei der Wartung von bestehenden Schienenstrecken, wo üblicherweise nur zeitlich begrenzte Wartungsintervalle verfügbar sind. Zudem kann die Montage in schwer zugänglichen Bereichen, beispielsweise in Tunnelabschnitten besonders komplex und/oder zeitintensiv sein.

Es ist daher eine Aufgabe der vorliegenden Offenbarung, eine Abspanneinrichtung zu schaffen, die in möglichst kurzer Zeit an ihrem Bestimmungsort montiert werden kann. Dadurch soll die Ausnutzung der verfügbaren Arbeits- und Wartungszeit effizienter gestaltet werden.

Diese nicht erfindungsgemäße Aufgabe wird durch Bereitstellung einer Montagekonstruktion gelöst, die mit den Führungsstangen der Abspanneinrichtung verbunden ist. Dadurch wird eine Vorkonfektionierung der Abspanneinrichtung ermöglicht. Dies bedeutet, dass die Abspannvorrichtung bereits im bestimmungsgemäßen Aufbau an den Ort der Montage geliefert werden kann, d.h. insbesondere befinden sich die Führungsstangen und das Abspanngewicht bereits in der gewünschten Position zueinander.

Die vorliegende Offenbarung betrifft im nicht erfindungsgemäßen Aspekt somit eine Abspanneinrichtung für Fahrdrähte und/oder Tragseile von Fahrdrähten, insbesondere für den schienengebundenen Verkehr, umfassend ein über ein Verbindungsseil mit dem Fahrdraht und/oder dem Tragseil verbindbares oder verbundenes Abspanngewicht, wobei das Abspanngewicht wenigstens zwei Führungseinrichtungen umfasst, über die das Abspanngewicht beweglich entlang von zwei im Wesentlichen parallel zueinander verlaufenden Führungsstangen geführt ist.

Gegebenenfalls sind die Führungsstangen an ihrem unteren Ende und/oder unterhalb des Abspanngewichts über ein Querelement miteinander verbunden. Eine derartige Abspanneinrichtung ist insbesondere für den Einsatz in Tunnelbereichen bzw. für die Montage an Tunnelwände oder andere Wände ausgebildet.

Es kann vorgesehen sein, dass die Führungsstangen im Bereich eines dem unteren Ende gegenüberliegenden oberen Endes und/oder oberhalb des Abspanngewichts miteinander über eine entfernbare Montagekonstruktion verbunden sind.

Insbesondere wird durch die Führungsstangen, das Querelement und die Montagekonstruktion ein temporärer Rahmen gebildet, der das Abspanngewicht aufnimmt bzw. führt.

Die entfernbare Montagekonstruktion kann mit dem Rest der Abspanneinrichtung insbesondere lösbar verbunden sein, beispielsweise über Schraub-, Steck- oder andere Verbindungen.

Relative Begriffe wie "oberhalb" oder "unterhalb" beziehen sich in Zusammenhang mit der vorliegenden Erfindung insbesondere auf die Ausrichtung in der bestimmungsgemäßen Verwendung.

Gegebenenfalls kann vorgesehen sein, dass die Führungsstangen im Bereich des oberen Endes und/oder oberhalb des Abspanngewichts Befestigungsöffnungen aufweisen, wobei durch die Befestigungsöffnungen je ein Befestigungsmittel der Montagekonstruktion geführt ist. Die Befestigungsöffnungen können Befestigungslöcher sein, die die Führungsstangen in Querrichtung durchsetzen.

Gegebenenfalls kann vorgesehen sein, dass die Montagekonstruktion einen Montagerahmen mit zwei an den Führungsstangen anliegenden Profilen, insbesondere Winkelprofilen, umfasst, wobei die Profile über zumindest eine Rahmenquerstrebe miteinander verbunden sind. Dadurch wird eine besonders stabile Konstruktion ermöglicht.

Gegebenenfalls kann vorgesehen sein, dass die Profile je eine Öffnung aufweisen, wobei das je eine Befestigungsmittel durch die Öffnung geführt ist. Die Öffnung kann ein Loch, beispielsweise eine Bohrung sein.

Gegebenenfalls kann vorgesehen sein, dass die Montagekonstruktion zumindest zwei Sicherungselemente umfasst, wobei die Befestigungsmittel durch Öffnungen der Sicherungselemente geführt sind, und wobei die Sicherungselemente jeweils an der den Profilen gegenüberliegenden Seite der Führungsstangen angeordnet sind.

Die Sicherungselemente können als Winkelprofile ausgeführt sein und die Führungsstangen zumindest teilweise umschließen.

In einer Ausführungsform weisen die Führungsstangen einen rechteckigen, insbesondere quadratischen, Querschnitt auf und die Sicherungselemente sowie die Profile sind als Winkelprofile ausgebildet, die jeweils an zumindest zwei Seiten der Führungsstangen anliegen.

Gegebenenfalls kann vorgesehen sein, dass die Montagekonstruktion ein Verankerungselement umfasst, das zur Verbindung der Abspanneinrichtung mit einer Hebeeinrichtung, beispielsweise mit einem Kran, eingerichtet ist. Das Verankerungsmittel kann beispielsweise eine Lasche mit einer Öffnung sein, es sind jedoch auch andere Ausführungen möglich. Das Verankerungselement kann auch zur Aufnahme eines weiteren Verbindungselements eingerichtet sein, beispielsweise zur Aufnahme eines Schäkels, der über ein Zugseil mit einem Kran verbunden werden kann.

Dadurch kann die Abspanneinrichtung angehoben werden. Bei Abspanneinrichtungen im Stand der Technik ist ein Anheben mittels eines Krans nicht erforderlich, da die Einzelteile manuell gehoben werden können. Die Notwendigkeit eines Verankerungselements besteht dort nicht und diese ergibt sich erst durch die Vorkonfektionierung der Abspanneinrichtung, da die Einrichtung in fertig zusammengesetzter Form beispielsweise ein Gewicht um etwa 1,5 t aufweist und daher nicht mehr manuell angehoben werden kann.

Gegebenenfalls kann vorgesehen sein, dass das Verankerungselement mittig zwischen den Führungsstangen angeordnet ist. Gegebenenfalls ist das Verankerungselement mittig an einer Rahmenquerstrebe des Montagerahmens angeordnet.

Gegebenenfalls ist das Verankerungselement mit wenigstens 20 kN, bevorzugt wenigstens 30 kN, Zugkraft belastbar, wobei die Belastungsrichtung insbesondere in Längserstreckungsrichtung der Führungsstangen verläuft. Dadurch kann die gesamte Abspanneinrichtung am Verankerungselement angehoben werden.

Gegebenenfalls umfasst die Abspanneinrichtung Befestigungselemente zur Befestigung an einer Wand, insbesondere an einer Tunnelwand. Befestigungselemente können insbesondere im Bereich des oberen und des unteren Endes der Abspanneinrichtung angeordnet sein.

Die vorliegende Offenbarung betrifft auch ein Verfahren zur Montage einer Abspannvorrichtung, das die folgenden Schritte umfasst:
- Bereitstellen einer Abspanneinrichtung gemäß dem nicht erfindungsgemäßen Aspekt,
- Befestigen der Abspanneinrichtung an einer Oberfläche, beispielsweise an einer Tunnelwand, oder an einem anderen geeigneten Montageort,
- Entfernen der Montagekonstruktion von der Abspanneinrichtung,
- Abspannen eines Tragseils und/oder eines Fahrdrahts mit dem Abspanngewicht.

Die vorliegende Offenbarung betrifft in einem erfindungsgemäßen Aspekt eine Abspanneinrichtung für Fahrdrähte und/oder Tragseile von Fahrdrähten gemäß dem unabhängigen Patentanspruch 1.

Abspanneinrichtungen werden im Stand der Technik eingesetzt, um Fahrdrähten und/oder Tragseilen von Fahrdrähten die nötige Spannung zu verleihen. Derartige Einrichtungen finden beispielsweise im Bereich des schienengebundenen Verkehrs, insbesondere bei Eisenbahnen, Verwendung. Entsprechende Abspanneinrichtungen sind beispielsweise aus der EP 1 281 563 A1 oder aus der CN 203528324 U bekannt.

Bekannte Abspanneinrichtungen umfassen ein Abspanngewicht, das an Führungsstangen beweglich geführt ist. Das Abspanngewicht besteht bekanntermaßen aus einer Vielzahl von Gewichtselementen, die beispielsweise als Platten aus Flachstahl ausgeführt sind. Je nach gewünschter Spannkraft kann die Zahl der Gewichtselemente und somit die Gesamtmasse des Abspanngewichts erhöht oder verringert werden. Eine Veränderung der Gesamtmasse des Abspanngewichts kann beispielsweise bei abgenützten Fahrdrähten oder bei geänderten Anforderungen im Laufe des Betriebs erforderlich sein. Auch bei einer höheren Betriebsgeschwindigkeit kann eine größere Abspannkraft erforderlich werden.

Weitere Abspannvorrichtungen mit Gewichtselementen sind in der GB 2207403 A und in der EP 0 695 666 A1 gezeigt.

Bei im Stand der Technik bekannten Abspanneinrichtungen sind die Gewichtselemente meist in einem Halterahmen befestigt und ein Hinzufügen oder Entnehmen einzelner Gewichtselemente ist nur nach Ausbau des Abspanngewichts möglich. Insbesondere ist es nicht möglich, unter Aufrechterhaltung des Zuges weitere Gewichtselemente hinzuzufügen. Die Veränderung der Abspannkraft erfordert somit einen beträchtlichen Arbeitsaufwand, der im Bereich des schienengebundenen Verkehrs insbesondere bei Wartungsarbeiten zu vermeiden ist, da währen der Arbeiten eine Sperre der entsprechenden Strecke erforderlich ist.

Es ist daher eine Aufgabe des erfindungsgemäßen Aspekts, eine Abspanneinrichtung zu schaffen, die eine möglichst einfache Veränderung der Gesamtmasse des Abspanngewichts ermöglicht. Insbesondere soll vermieden werden, dass die Einrichtung bzw. das Abspanngewicht zerlegt werden muss, wenn eine Veränderung der Abspannkraft erforderlich ist.

Diese Aufgabe wird durch Bereitstellung von zumindest einem Gewichtselement gelöst, das zumindest zweiteilig ausgeführt ist. Dadurch können die Gewichtselemente aus dem Halterahmen entnommen werden, ohne dass dieser zerlegt werden muss.

Im erfindungsgemäßen Aspekt betrifft die vorliegende Erfindung somit eine Abspanneinrichtung für Fahrdrähte und/oder Tragseile von Fahrdrähten, insbesondere für den schienengebundenen Verkehr, umfassend ein über ein Verbindungsseil mit dem Fahrdraht und/oder dem Tragseil verbindbares oder verbundenes Abspanngewicht, wobei das Abspanngewicht wenigstens zwei Führungseinrichtungen umfasst, über die das Abspanngewicht beweglich entlang von zwei im Wesentlichen parallel zueinander verlaufenden Führungsstangen geführt ist, wobei das Abspanngewicht eine Vielzahl von in einem Halterahmen gehaltenen, einzelnen Gewichtselementen umfasst. Die Gewichtselemente verlaufen insbesondere im Wesentlichen parallel zueinander.

Erfindungsgemäß kann vorgesehen sein, dass ein Gewichtselement, vorzugsweise jedes Gewichtselement, wenigstens zwei Gewichtselementteile umfasst oder daraus gebildet ist, wobei die beiden Gewichtselementteile eines Gewichtselements formschlüssig miteinander verbunden sind.

Die formschlüssige Verbindung der Gewichtselementteile kann leicht gelöst werden, wodurch eine Entnahme aus dem Halterahmen möglich ist, ohne dass das Abspanngewicht zerlegt werden muss. Gleichermaßen ist auch eine Hinzufügung weiterer Gewichtselemente möglich.

Es können mehrere Gewichtselemente zweiteilig ausgeführt sein, jedoch muss dies nicht für alle Gewichtselemente des Abspanngewichts zutreffen. Beispielsweise kann eine bestehende Abspanneinrichtung mit bekannten einstückigen Gewichtselementen nachträglich mit den erfindungsgemäßen zweiteiligen Gewichtselementen ausgestattet werden.

Gegebenenfalls sind die Gewichtselemente Flacheisen, beispielsweise aus einem unlegierten Stahl, die eine Masse zwischen etwa 10 kg und 50 kg aufweisen können. Ein Abspanngewicht kann je nach Bedarf beispielsweise 20 bis 50 Gewichtselemente umfassen.

In Zusammenhang mit der Beschreibung der Merkmale des Gewichtselements wird angemerkt, dass zur Vereinfachung die Einzahl verwendet wird. Die Merkmale können sich jedoch auf eine beliebige Anzahl von Gewichtselementen der Abspanneinrichtung beziehen, vorzugsweise auf alle Gewichtselemente.

Gegebenenfalls kann vorgesehen sein, dass das Gewichtselement einen ersten Gewichtselementteil und einen zweiten Gewichtselementteil umfasst, wobei der erste Gewichtselementteil einen Formschlussfortsatz aufweist und wobei der zweite Gewichtselementteil eine Formschlussausnehmung aufweist, die zur Aufnahme des Formschlussfortsatzes des ersten Gewichtselementteils ausgebildet ist. Die Formschlussausnehmung hat vorzugsweise eine Form die zur Form des Formschlussfortsatzes komplementär ist, sodass die Formschlussausnehmung den Formschlussfortsatz bündig aufnehmen kann.

In einer möglichen Ausführungsform ist der Formschlussfortsatz schwalbenschwanzförm ig.

Gegebenenfalls kann vorgesehen sein, dass der Halterahmen zwei im Wesentlichen parallel zueinander verlaufende Gewichtselementführungen mit je einem Führungsfortsatz umfasst, und dass ein Gewichtselement, vorzugsweise jedes Gewichtselement, an zwei gegenüberliegenden Seiten je einen Führungsschlitz aufweist, wobei der Führungsfortsatz in den Führungsschlitz eingeführt ist.

Dadurch werden die Gewichtselemente fest im Abspanngewicht bzw. im Halterahmen gehalten. Eine Entfernung ist nur durch Zerlegen des Halterahmens bzw. durch Lösen der Formschlussverbindung zwischen den Gewichtselementteilen möglich.

Gegebenenfalls kann vorgesehen sein, dass der Formschlussfortsatz und der Führungsschlitz an gegenüberliegenden Seiten eines Gewichtselementteils angeordnet sind. Gegebenenfalls kann vorgesehen sein, dass die Formschlussausnehmung und der Führungsschlitz an gegenüberliegenden Seiten eines Gewichtselementteils angeordnet sind.

Gegebenenfalls liegt der Verbindungsbereich, der den Formschlussfortsatz und die Formschlussausnehmung umfasst, in horizontaler Richtung zwischen den Gewichtselementführungen. Insbesondere sind die Gewichtselementteile eines Gewichtselements horizontal nebeneinander angeordnet. Der Verbindungsbereich trennt das Gewichtselements insbesondere entlang der Haupterstreckungsrichtung, also entlang der längsten Abmessung, in zwei oder gegebenenfalls mehr als zwei Gewichtselementteile.

Gegebenenfalls ist vorgesehen, dass die Gewichtselementteile eines Gewichtselements horizontal nebeneinander angeordnet sind.

Im erfindungsgemäßen Aspekt betrifft die vorliegende Offenbarung auch ein Gewichtselement als solches, das zwei Gewichtselementteile umfasst, wobei die Gewichtselementteile formschlüssig miteinander verbunden sind. Somit betrifft die Erfindung auch die Verwendung eines Gewichtselements mit zwei formschlüssig miteinander verbundenen Gewichtselementteilen als Teil des Abspanngewichts einer Abspanneinrichtung für Fahrdrähte und/oder Tragseile von Fahrdrähten.

Der nicht erfindungsgemäße und der erfindungsgemäße Aspekt sind unabhängig voneinander. Beliebige Kombinationen von Merkmalen beider Aspekte zählen jedoch ebenfalls zum Gegenstand der vorliegenden Offenbarung. Beispielsweise ist eine Abspannvorrichtung gemäß dem nicht erfindungsgemäßen Aspekt mit den Gewichtselementen aus dem erfindungsgemäßen Aspekt Teil der vorliegenden Offenbarung.

Die Erfindung ist durch die Ansprüche definiert.

Die Aspekte der vorliegenden Offenbarung werden nachfolgend anhand von exemplarischen Ausführungsbeispielen im Detail erläutert. Weitere technische Merkmale ergeben sich aus der Beschreibung, den Patentansprüchen sowie den Figuren der Ausführungsbeispiele.

Es zeigen:
Fig. 1: Eine Abspanneinrichtung nach dem Stand der Technik an einer Tunnelwand;
Fig. 2: Eine Abspanneinrichtung gemäß einem Ausführungsbeispiel des nicht erfindungsgemäßen Aspekts;
Fig. 3: Eine Detailansicht der Abspannvorrichtung aus Fig. 2;
Fig. 4: Eine Abspanneinrichtung gemäß einem Ausführungsbeispiel des erfindungsgemäßen Aspekts;
Fig. 5: Eine Detailansicht eines einzelnen Gewichtselements aus Fig. 4;
Fig. 6: Eine Detailansicht des zweiten Gewichtselementteils ausFig. 5;
Fig. 7: Eine Detailansicht des ersten Gewichtselementteils aus Fig. 5

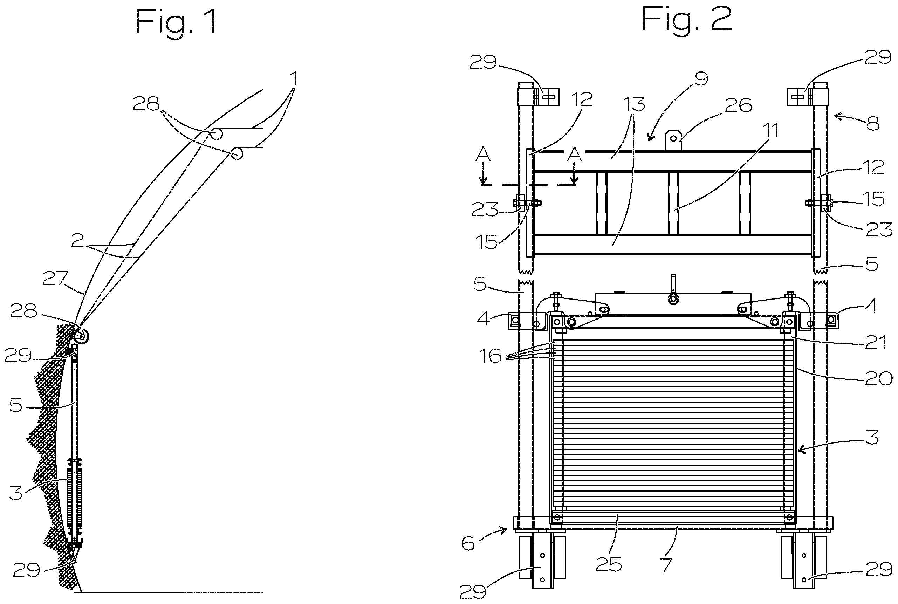

Fig. 1 zeigt eine Abspanneinrichtung nach dem Stand der Technik an einer Tunnelwand 27, wobei die Abspanneinrichtung zum Spannen von zwei Tragseilen 1 für Oberleitungen einer Eisenbahnstrecke verwendet wird.

Die Abspanneinrichtung umfasst ein Abspanngewicht 3, das an Führungsstangen 5 in vertikaler Richtung geführt ist. Die Führungsstangen 5 sind an der Tunnelwand 27 über Befestigungselemente 29 angebracht.

Das Abspanngewicht 3 weist ein Gewicht von etwa 1500 kg auf und spannt die Tragseile 1, wobei die Verbindung zwischen Tragseil 1 und Abspanngewicht 3 über ein Verbindungsseil 2 hergestellt ist, das über an der Tunnelwand 27 angebrachte Umlenkrollen 28 geführt wird. Das Abspanngewicht 3 umfasst eine Vielzahl an Gewichtselementen, die in einem Halterahmen gehalten werden.

Eine derartige Abspanneinrichtung muss vor Ort zusammengebaut werden, was einen hohen Arbeitsaufwand erfordert. Wenn die Abspannkraft verändert werden soll, muss der Halterahmen des Abspanngewichts zerlegt werden, um Gewichtselemente hinzufügen oder entnehmen zu können, was ebenfalls einen hohen Arbeitsaufwand erfordert.

Fig. 2 zeigt eine Abspanneinrichtung gemäß einem Ausführungsbeispiel des nicht erfindungsgemäßen Aspekts. Im Vergleich zur Abspanneinrichtung aus Fig. 1 ist jene Einrichtung aus Fig. 2 noch nicht an einer Tunnelwand oder an einem anderen geeigneten Ort befestigt. Die Abspanneinrichtung aus Fig. 2 kann in vorkonfektionierter Form an den Bestimmungsort angeliefert und dort installiert werden. Der Bestimmungsort kann beispielsweise eine Tunnelbaustelle sein.

Ähnlich wie die Einrichtung aus Fig. 1 umfasst die Einrichtung ein Abspanngewicht 3 sowie zwei Führungsstangen 5, an welchen das Abspanngewicht 3 über Führungseinrichtungen 4 bewegbar gelagert ist.

Das Abspanngewicht 3 umfasst eine Vielzahl von Gewichtselementen 16, die als Flacheisen ausgebildet sind und die in einem Halterahmen 25 befestigt sind. Der Halterahmen 25 umfasst zwei Gewichtselementführungen 20 mit je einem Führungsfortsatz 21. Die Gewichtselementführungen 20 sind als T-Profile ausgebildet und je ein freier, nach innen weisender Schenkel des Profils bildet den Führungsfortsatz 21. Die Führungsfortsätze 21 sind beidseitig in Führungsausnehmungen (nicht gezeigt) der Gewichtselemente 16 eingeführt, sodass die Gewichtselemente 16 formschlüssig im Halterahmen 25 gehalten werden. Um die Gewichtselemente 16 aus dem Halterahmen 25 zu entnehmen oder weitere Gewichtselemente 16 zum Halterahmen hinzuzufügen, muss dieser zerlegt bzw. geöffnet werden.

In diesem Ausführungsbeispiel sind 31 Gewichtselemente vorgesehen, die jeweils ein Gewicht von etwa 45 kg aufweisen.

Die beiden Führungsstangen 5, die als Rohre mit quadratischem Querschnitt ausgebildet sind, sind am unteren Ende 6 der Abspanneinrichtung, unterhalb des Abspanngewichts 3, mit einem Querelement 7 verbunden. Zur Befestigung der Abspanneinrichtung an Wänden sind am oberen Ende 8 sowie am unteren Ende 6 der Führungsstangen 5 Befestigungselemente 29 vorgesehen.

Im Bereich des oberen Endes 8, oberhalb des Abspanngewichts 3, ist eine Montagekonstruktion 9 vorgesehen, die die beiden ansonsten freien Enden der Führungsstangen 5 miteinander verbindet. Dadurch wird die Abspanneinrichtung stabilisiert und kann in vorkonfektionierter Form an den Bestimmungsort geliefert werden.

Die Montagekonstruktion 9 umfasst in diesem Ausführungsbeispiel einen Montagerahmen 11. Der Montagerahmen 11 umfasst wiederum zwei Profile 12, die als Winkelprofile ausgeführt sind und an den Führungsstangen 5 anliegen. Die Profile 12 sind über zwei Rahmenquerstreben 13 miteinander verbunden. Mittig an einer Rahmenquerstrebe 13 ist ein Verankerungselement 26 angeordnet, das dazu dient, die Abspanneinrichtung beispielsweise mit einem Kran anzuheben. Daher ist das Verankerungselement 26 in diesem Ausführungsbeispiel dazu ausgeführt, Zugkräften von wenigstens 25 kN standzuhalten.

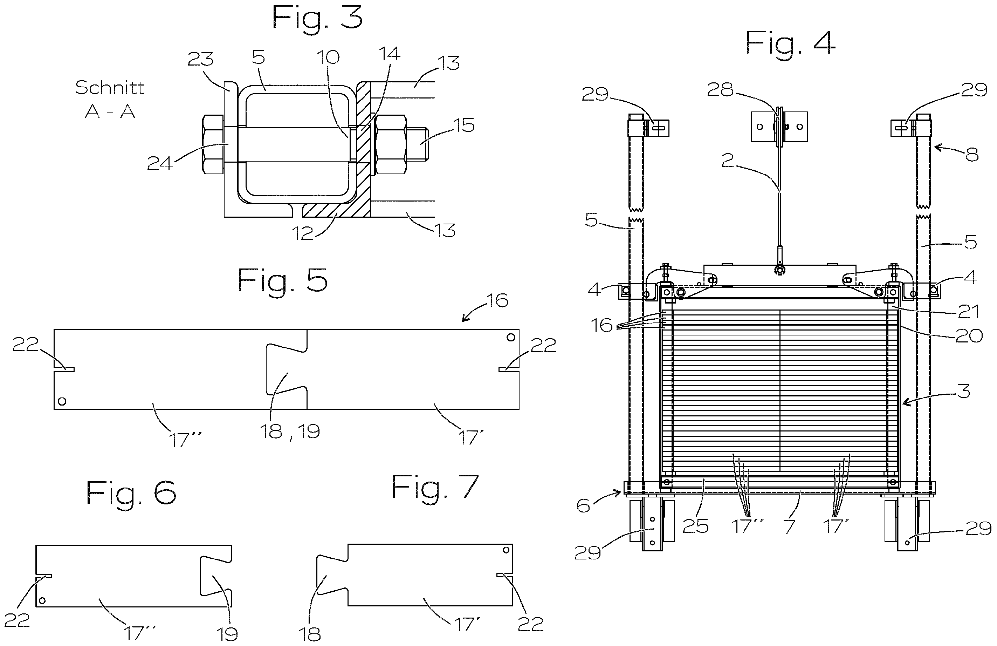

Zusätzlich umfasst die Montagekonstruktion 9 zwei Sicherungselemente 23, die als kurze Winkelprofilstücke ausgeführt sind und den Profilen 12 gegenüberliegend an den beiden Führungsstangen 5 anliegen. Die Befestigung erfolgt mittels Befestigungsmitteln 15, die in diesem Ausführungsbeispiel Mutterschrauben mit zugehörigen Muttern sind. Die Anordnung eines Profils 12 sowie eines Sicherungselements 23 an einer Führungsstange 5 ist in Fig. 3 im Detail dargestellt (Schnitt A-A).

Hier ist erkennbar, dass das Profil 12 sowie das Sicherungselement 23 jeweils eine Öffnung 14, 24 aufweist, wobei die beiden Öffnungen 14, 24 zur Durchführung des Befestigungsmittels 15 ausgeführt sind. Ferner weist auch die Führungsstange 5 eine Befestigungsöffnung 10 auf, die zur Durchführung des Befestigungsmittels 15 ausgeführt ist. Der entsprechende Bereich der zweiten Führungsstange 5 ist analog zu Fig. 3 ausgeführt.

Die Funktion und Verwendung der Einrichtung gemäß diesem Ausführungsbeispiel ist wie folgt: Die Abspanneinrichtung wird zentral im Werk wie in Fig. 2 dargestellt produziert und dann zum Bestimmungsort transportiert. Dann wird die Abspanneinrichtung über die Befestigungselemente 29 beispielsweise an einer Tunnelwand befestigt. Nach erfolgter Befestigung wird die Montagekonstruktion 9 durch Lösen und Entfernen der Befestigungsmittel 15 entfernt. Dann kann die Abspanneinrichtung zum Abspannen eines Fahrdrahts oder eines Tragseils, wie in Fig. 1 illustriert, eingesetzt werden.

Fig. 4 zeigt eine Abspanneinrichtung gemäß einem Ausführungsbeispiel des erfindungsgemäßen Aspekts. Im Gegensatz zur Abspanneinrichtung aus Fig. 2 ist in diesem Ausführungsbeispiel keine Montagekonstruktion vorgesehen. Die Abspanneinrichtung ist bereits an einer Tunnelwand befestigt und das Abspanngewicht 3 ist über ein Verbindungsseil 2, das über eine Umlenkrolle 28 läuft, mit einem Tragseil verbunden (nicht gezeigt). Diese Anordnung ist jener ähnlich, die in Fig. 1 dargestellt ist.

In dem in Fig. 4 gezeigten Ausführungsbeispiel bestehen die Gewichtselemente 16 aus jeweils zwei Gewichtselementteilen 17', 17", die formschlüssig miteinander verbunden sind. Die beiden Gewichtselementteile 17', 17" sind horizontal nebeneinander angeordnet.

Bis auf die erläuterten Unterschiede weist die Abspanneinrichtung aus Fig. 4 dieselben Merkmale auf wie jene aus Fig. 2. Diese Merkmale werden daher nicht mehr im Detail beschrieben.

Ein Gewichtselement 16, wie es in der Abspanneinrichtung von Fig. 4 eingesetzt wird, ist in Fig. 5 in einer Aufsicht dargestellt. Die formschlüssige Verbindung zwischen dem ersten Gewichtselementteil 17' und dem zweiten Gewichtselementteil 17" erfolgt über den Eingriff eines Formschlussfortsatzes 18 in eine korrespondierende Formschlussausnehmung 19. Der Formschlussfortsatz 18 weist in diesem Ausführungsbeispiel eine Schwalbenschwanzform auf.

Neben der Formschlussverbindung zeigt Fig. 4 auch die Führungsschlitze 22, die jeweils an den dem Formschlussfortsatz 18 bzw. der Formschlussausnehmung 19 gegenüberliegenden Seiten der Gewichtselementteile 17', 17" angeordnet sind. Diese Führungsschlitze 22 dienen dem Eingriff der Führungsfortsätze 21 der Gewichtselementführung 20.

Fig. 6 und 7 zeigen den ersten Gewichtselementteil 17' bzw. den zweiten Gewichtselementteil 17" einzeln.

Durch die zweiteilige Ausführung der Gewichtselemente 16 können diese leicht aus dem Halterahmen 25 entnommen werden, ohne dass ein Zerlegen oder Abbau desselben erforderlich ist. Dadurch lässt sich die Abspannkraft der Einrichtung mit wenig Zeitaufwand verändern.

In nicht dargestellten Ausführungsbeispielen können ein oder mehrere Gewichtselemente aus Fig. 5 auch in einer Abspanneinrichtung verwendet werden, wie sie in Fig. 2 dargestellt ist.

### Bezugszeichenliste

- 1: Tragseil
- 2: Verbindungsseil
- 3: Abspanngewicht
- 4: Führungseinrichtung
- 5: Führungsstange
- 6: unteres Ende
- 7: Querelement
- 8: oberes Ende
- 9: Montagekonstruktion
- 10: Befestigungsöffnung
- 11: Montagerahmen
- 12: Profil
- 13: Rahmenquerstrebe
- 14: Öffnung
- 15: Befestigungsmittel
- 16: Gewichtselement
- 17': erster Gewichtselementteil
- 17": zweiter Gewichtselementteil
- 18: Formschlussfortsatz
- 19: Formschlussausnehmung
- 20: Gewichtselementführung
- 21: Führungsfortsatz
- 22: Führungsschlitz
- 23: Sicherungselement
- 24: Öffnung
- 25: Halterahmen
- 26: Verankerungselement
- 27: Tunnelwand
- 28: Umlenkrolle
- 29: Befestigungselement

## Patentansprüche

1. **Abspanneinrichtung** für Fahrdrähte und/oder Tragseile (1) von Fahrdrähten, insbesondere für den schienengebundenen Verkehr, umfassend ein über ein Verbindungsseil (2) mit dem Fahrdraht und/oder dem Tragseil (1) verbindbares oder verbundenes Abspanngewicht (3), wobei das Abspanngewicht (3) wenigstens zwei Führungseinrichtungen (4) umfasst, über die das Abspanngewicht (3) beweglich entlang von zwei im Wesentlichen parallel zueinander verlaufenden Führungsstangen (5) geführt ist, wobei das Abspanngewicht (3) eine Vielzahl von in einem Halterahmen (23) gehaltenen, einzelnen Gewichtselementen (16) umfasst, **dadurch gekennzeichnet, dass** ein Gewichtselement (16), vorzugsweise jedes Gewichtselement (16), zumindest zwei Gewichtselementteile (17', 17") umfasst oder daraus gebildet ist, wobei die beiden Gewichtselementteile (17', 17") eines Gewichtselements (16) formschlüssig miteinander verbunden sind.

2. Abspanneinrichtung nach Anspruch 1, **dadurch gekennzeichnet, dass** das Gewichtselement (16) einen ersten Gewichtselementteil (17') und einen zweiten Gewichtselementteil (17") umfasst, wobei der erste Gewichtselementteil (17') einen Formschlussfortsatz (18) aufweist und wobei der zweite Gewichtselementteil (17") eine Formschlussausnehmung (19) aufweist, die zur Aufnahme des Formschlussfortsatzes (18) des ersten Gewichtselementteils (17') ausgebildet ist.

3. Abspanneinrichtung nach Anspruch 2, **dadurch gekennzeichnet, dass** der Formschlussfortsatz (18) schwalbenschwanzförmig ausgebildet ist.

4. Abspanneinrichtung nach einem der Ansprüche 1 bis 3, **dadurch gekennzeichnet, dass** der Halterahmen (25) zwei im Wesentlichen parallel zueinander verlaufende Gewichtselementführungen (20) mit je einem Führungsfortsatz (21) umfasst, und dass ein Gewichtselement (16), vorzugsweise jedes Gewichtselement (16), an zwei gegenüberliegenden Seiten je einen Führungsschlitz (22) aufweist, wobei der Führungsfortsatz (21) in den Führungsschlitz (22) eingeführt ist.

5. Abspanneinrichtung nach Anspruch 4, **dadurch gekennzeichnet, dass** der Formschlussfortsatz (18) bzw. die Formschlussausnehmung (19) und der Führungsschlitz (22) an gegenüberliegenden Seiten eines Gewichtselementteils (17', 17") angeordnet sind.

6. Abspanneinrichtung nach einem der Ansprüche 1 bis 5, **dadurch gekennzeichnet, dass** die Gewichtselementteile (17', 17") eines Gewichtselements (16) horizontal nebeneinander angeordnet sind.

## Claims

1. A **straining device** for contact wires and/or suspension cables (1) of contact wires, in particular for rail-bound traffic, comprising a straining weight (3) connectable or connected to the contact wire and/or the suspension cable (1) via a connecting cable (2), wherein the straining weight (3) comprises at least two guiding systems (4), via which the straining weight (3) is movably guided along two guide rods (5) running substantially parallel to one another, wherein the straining weight (3) comprises a plurality of individual weight elements (16) held in a holding frame (23), **characterised in that** a weight element (16), preferably each weight element (16), comprises or is formed of at least two weight element parts (17', 17"), wherein the two weight element parts (17', 17") of a weight element (16) are positively connected to one another.

2. The straining device according to claim 1, **characterised in that** the weight element (16) comprises a first weight element part (17') and a second weight element part (17"), wherein the first weight element part (17') has a positive-locking extension (18) and wherein the second weight element part (17") has a positive-locking recess (19) which is designed for receiving the positive-locking extension (18) of the first weight element part (17').

3. The straining device according to claim 2, **characterised in that** the positive-locking extension (18) is dovetail-shaped.

4. The straining device according to one of claims 1 to 3, **characterised in that** the holding frame (25) comprises two weight element guides (20) which run substantially parallel to one another and each have a guide extension (21) and **in that** a weight element (16), preferably each weight element (16), has a guide slot (22) on two opposite sides respectively, wherein the guide extension (21) is inserted into the guide slot (22).

5. The straining device according to claim 4, **characterised in that** the positive-locking extension (18) or the positive-locking recess (19) and the guide slot (22) are arranged on opposite sides of a weight element part (17', 17").

6. The straining device according to one of claims 1 to 5, **characterised in that** the weight element parts (17', 17") of a weight element (16) are arranged horizontally adjacent to each other.

## Revendications

1. **Dispositif de haubanage** pour des fils de contact et/ou des câbles porteurs (1) de fils de contact, en particulier pour le trafic sur rails, comprenant un poids de haubanage (3) pouvant être relié ou étant relié au fil de contact et/ou au câble porteur (1) par un câble de liaison (2), dans lequel le poids de haubanage (3) comprend au moins deux dispositifs de guidage (4), sur lesquels le poids de haubanage (3) est guidé de manière mobile le long de deux barres de guidage (5) s'étendant sensiblement parallèlement l'une à l'autre, dans lequel le poids de haubanage (3) comprend une pluralité d'éléments de poids (16) individuels maintenus dans un cadre de maintien (23), **caractérisé en ce qu'un** élément de poids (16), de préférence chaque élément de poids (16), comprend au moins deux parties d'élément de poids (17', 17") ou est formé à partir de celles-ci, dans lequel les deux parties d'élément de poids (17', 17") d'un élément de poids (16) sont reliées entre elles par complémentarité de formes.

2. Dispositif de haubanage selon la revendication 1, **caractérisé en ce que** l'élément de poids (16) comprend une première partie d'élément de poids (17') et une deuxième partie d'élément de poids (17"), dans lequel la première partie d'élément de poids (17') présente un prolongement de liaison par la forme (18) et la deuxième partie d'élément de poids (17") présente un évidement de liaison par la forme (19) qui est conçu pour recevoir le prolongement de liaison par la forme (18) de la première partie d'élément de poids (17').

3. Dispositif de haubanage selon la revendication 2, **caractérisé en ce que** le prolongement de liaison par la forme (18) est réalisé en forme de queue d'aronde.

4. Dispositif de haubanage selon l'une des revendications 1 à 3, **caractérisé en ce que** le cadre de maintien (25) comprend deux guides d'élément de poids (20) s'étendant sensiblement parallèlement l'un à l'autre et comportant chacun un prolongement de guidage (21), et **en ce qu'**un élément de poids (16), de préférence chaque élément de poids (16), présente sur deux côtés opposés une fente de guidage (22) respective, dans lequel le prolongement de guidage (21) est introduit dans la fente de guidage (22).

5. Dispositif de haubanage selon la revendication 4, **caractérisé en ce que** le prolongement de liaison par la forme (18) ou l'évidement de liaison par la forme (19) et la fente de guidage (22) sont disposés sur des côtés opposés d'une partie d'élément de poids (17', 17").

6. Dispositif de haubanage selon l'une des revendications 1 à 5, **caractérisé en ce que** les parties d'élément de poids (17', 17") d'un élément de poids (16) sont disposées horizontalement côte à côte.
